# EUROPÄISCHE PATENTANMELDUNG

(11) **EP 1 958 498 A1**
(43) Veröffentlichungstag der Anmeldung: **20.08.2008**
(21) Anmeldenummer: 07003859.1
(22) Anmeldetag: 26.02.2007
(51) Int. Cl.: A01G 9/02

(54) **Kulturtopf**

(30) Priorität: 16.02.2007 EP 07003298
(71) Anmelder: Bremkens, Christian, 47608 Geldern - Walbeck (DE)
(72) Erfinder: Bremkens, Christian, 47608 Geldern - Walbeck (DE)
(74) Vertreter: Gesthuysen, von Rohr & Eggert

(57) **Zusammenfassung**

Dargestellt und beschrieben ist ein Kulturtopf (1) zur Aufzucht einer Pflanze, mit einem inneren Pflanztopf (2) und mit wenigstens einem den Pflanztopf (2) umgebenden äußeren Übertopf (3), wobei der Pflanztopf (2) zur Aufnahme eines zur Aufzucht einer Pflanze vorgesehenen Substrates ausgebildet ist, wobei zwischen dem Pflanztopf (2) und dem Übertopf (3) ein Belüftungsspalt vorgesehen ist, wobei in wenigstens einer Seitenwand (19) des Pflanztopfes (2) wenigstens eine seitliche Belüftungsüffnung (6a) zur Belüftung des Wurzelbereichs der Pflanze vorgesehen ist und eine der Seitenwand (19) des Pflanztopfes (2) benachbarte Seitenwand (10a) des Übertopfes (3) für Wurzeln der Pflanze undurchdringbar ausgebildet ist, so daß es nicht zu einem Herauswachsen von Wurzeln durch die Seitenwand (10a) des Übertopfes (3) hindurch in die Umgebung kommt.

## Beschreibung

Die Erfindung betrifft einen Kulturtopf zur Aufzucht einer Pflanze.

Kulturtöpfe der in Rede stehenden Art werden in Gärtnereien zur Aufzucht von Pflanzen verwendet. Die Kulturtöpfe mit den Pflanzen werden auf einer Aufstellfläche in einem Gewächshaus oder an der freien Luft aufgestellt. Die Bewässerung kann durch Sprühanlagen erfolgen. Auch werden sogenannte "Ebbe-und-Flut"-Systeme angewandt, wobei zu bestimmten Zeitpunkten eine Wasserschicht auf die Aufstellfläche gegeben wird, die die untere Seite der Kulturtöpfe umspült. Das Wasser kann über Öffnungen im Boden der Kulturtöpfe eindringen, so daß die Versorgung der Pflanzen mit Wasser gewährleistet ist.

Im Zusammenhang mit dem Wachstum und der Kondition der Pflanzen ist es zum einen von großer Bedeutung, daß nicht zuviel Wasser in der Erde oder in dem Substrat, in dem die Pflanzen aufgezüchtet werden, in den Kulturtöpfen nach einer Bewässerung zurückbleibt. Nach der Bewässerung muß das überflüssige Wasser abgeleitet werden können, was über die Öffnungen im Boden der Kulturtöpfe erfolgt. Zum anderen ist für das Wachstum und die Kondition der Pflanzen eine ausreichende Sauerstoffversorgung der Wurzeln der Pflanzen von großer Bedeutung, was insbesondere für Epiphyten oder Aufsitzerpflanzen gilt, die in der Natur nicht auf dem Boden, sondern auf anderen lebenden oder abgestorbenen Pflanzen leben und ihre Nährsalze aus geringen Humusmengen, die sich in Astgabeln durch Anflug von Vögeln oder abgestorbene Vorgängerpflanzen sammeln, und aus dem Regenwasser beziehen. Zu den Epiphyten zählen beispielsweise Orchideen der Gattung Phalaenopsis, die überwiegend epiphytisch oder selten auch auf moosberwachsenen Felsen (lithophytisch) wachsen. Die Wurzeln beispielsweise von Orchideen der Gattung Phalaenopsis dienen neben der Aufnahme von Nährstoffen und von Wasser auch als Haftorgan, wobei die Pflanzen in kurzer Zeit lange Wurzeln ausbilden, um sich auf einem Untergrund festhalten zu können. Derartige Pflanzen werden zumeist in grobstückigen Substraten aus Rinden- und Mulchbestandteilen aufgezüchtet, was eine ausreichende Belüftung der Wurzeln zum einen und nach einer Bewässerung das schnelle Ableiten von Feuchtigkeit aus dem Wurzelbereich zum anderen sicherstellt.

Damit Sauerstoff durch den Kulturtopf von außen an den Wurzelbereich der Pflanzen gelangen kann, weisen Kulturtöpfe zur Aufzucht der vorgenannten Pflanzen in der Regel eine Mehrzahl von Belüftungslöchern in der Seitenwand des Kulturtopfes auf. In diesem Zusammenhang stellt sich bei den bekannten Kulturtöpfen das Problem ein, daß Wurzeln der Pflanze durch die seitlichen Belüftungslöcher nach außen wachsen können. Insbesondere bei der Aufzucht, wenn eine Vielzahl von bepflanzten Kulturtöpfen unmittelbar nebeneinander angeordnet sind, stellt sich das Problem, daß sich die durch die Seitenwand des Kulturtopfes dringenden Wurzeln von Pflanzen benachbarter Kulturtöpfe miteinander verschlingen, was eine spätere Trennung der Kulturtöpfe erschwert. Darüber hinaus müssen beim Trennen der Kulturtöpfe Beschädigungen im Wurzelbereich der Pflanzen hingenommen werden, die zu einer Schwächung der Pflanzen bis hin zum Absterben der Pflanzen führen können.

Der vorliegenden Erfindung liegt daher die Aufgabe zugrunde, einen Kulturtopf der eingangs genannten Art zur Verfügung zu stellen, der eine ausreichende Belüftung einer in den Kulturtopf eingepflanzten Pflanze im Wurzelbereich zuläßt und zum anderen wirkungsvoll ausschließt, daß es zu einem Zusammenwachsen der Wurzeln von Pflanzen benachbart zueinander aufgestellter Kulturtöpfe kommen kann.

Die vorgenannte Aufgabe ist bei einem Kulturtopf der eingangs genannten Art dadurch gelöst, daß ein innerer Pflanztopf mit wenigstens einem den Pflanztopf umgebenden äußeren Übertopf vorgesehen ist, wobei der Pflanztopf zur Aufnahme eines zur Aufzucht einer Pflanze vorgesehenen Substrates und, vorzugsweise, der Übertopf zur Aufnahme des Pflanzentopfes ausgebildet ist, wobei im Gebrauchszustand des Kulturtopfes zwischen dem Pflanztopf und dem Übertopf ein Belüftungsspalt gebildet wird, wobei in wenigstens einer Seitenwand des Pflanztopfes wenigstens eine seitliche Belüftungsöffnung zur Belüftung des Wurzelbereichs der Pflanze vorgesehen ist und eine der Seitenwand des Pflanztopfes benachbarte Seitenwand des Übertopfes für Wurzeln der Pflanze undurchdringbar ausgebildet ist, so daß es nicht zu einem Herauswachsen von Wurzeln aus dem inneren Pflanztopf durch die Seitenwand des Übertopfes hindurch in die Umgebung kommt.

Der Erfindung liegt der Grundgedanke zugrunde, einen doppelwandigen Kulturtopf zur Verfügung zu stellen, bei dem eine innere Wand den Pflanztopf für die Pflanze und eine Außenwand den Übertopf bildet. Der Pflanztopf weist vorzugsweise eine Mehrzahl von in einer Seitenwand des Pflanztopfes angeordneten seitlichen Belüftungsöffnungen auf, die eine ausreichende Belüftung der Pflanze im Wurzelbereich sicherstellen können. Die seitlichen Belüftungsöffnungen des Pflanztopfes weisen dabei eine Größe auf, die das Durchwachsen von Wurzeln durch die Seitenwand des Pflanztopfes hindurch zuläßt. In diesem Zusammenhang kann die Gesamtöffnungsfläche aller Belüftungsöffnungen einer Seitenwand des Pflanztopfes mehr als 50% der Gesamtaußenfläche, gebildet aus offenen und geschlossenen Flächenabschnitten der Seitenwand, vorzugsweise mehr als 70% der Gesamtaußenfläche, betragen. Im übrigen können im Boden des Pflanztopfes weitere Belüftungsöffnungen vorgesehen sein. Es versteht sich, daß über die Belüftungsöffnungen auch überflüssiges Wasser nach dem Bewässern der Pflanze aus dem Pflanztopf austreten kann. Im übrigen sind im Boden des Übertopfes vorzugsweise eine Mehrzahl von Entwässerungsöffnungen vorgesehen, die das Ablaufen von überschüssigem Wasser aus dem Kulturtopf ermöglichen.

Erfindungsgemäß ist weiter vorgesehen, daß das Herauswachsen von Wurzeln, die den inneren Pflanztopf durchdrungen haben, aus dem Kulturtopf nicht möglich ist, da die Seitenwand des äußeren Übertopfes für Wurzeln der Pflanze undurchdringbar ausgebildet ist. Im Ergebnis läßt es der erfindungsgemäße Kulturtopf gleichermaßen zu, die Pflanze in ausreichendem Maße über die Belüftungsöffnungen zu belüften und durch die Sperrwirkung des Übertopfs ein Zusammenwachsen von Wurzeln aus benachbarten Kulturtöpfen bei der Aufzucht der Pflanzen oder auch beim anschließenden Transport der Pflanzen zum weiteren Verbleib sicher auszuschließen.

Bei einer bevorzugten Ausführungsform der Erfindung ist vorgesehen, daß der Kulturtopf mehrteilig ausgebildet ist, wobei der Pflanztopf vorzugsweise unter Ausbildung eines Ringspaltes in den Übertopf einsetzbar ist. Im Nicht-Gebrauchszustand können der Pflanztopf und der Übertopf dann voneinander getrennt lagerbar und stapelbar sein. Das Einsetzen der Pflanztöpfe in die Übertöpfe erfolgt dabei vorzugsweise erst im Zusammenhang mit dem Bepflanzen der Pflanztöpfe. Grundsätzlich ist es natürlich auch möglich, daß der Kulturtopf einstückig bzw. einteilig ausgebildet ist und wenigstens eine Innenwandung und wenigstens eine mit der Innenwandung über einen Boden verbundene Außenwandung aufweist, wobei durch die Innenwandung der Pflanztopf und durch die Außenwand der Übertopf gebildet wird. Auch hier ist ein Belüftungsspalt zwischen dem Pflanztopf und dem Übertopf vorgesehen, der eine ausreichende Belüftung der Wurzeln zuläßt.

Der Belüftungsspalt sollte vorzugsweise eine Breite von 5 bis 25 mm, insbesondere eine Breite von ca. 15 mm, aufweisen. Es versteht sich, daß der Pflanztopf und der Übertopf ausreichend stabil ausgebildet sein müssen, damit es nicht zu einer Verformung des Belüftungsspaltes beim Befüllen des Pflanztopfes mit dem Substrat bzw. beim Bepflanzen kommen kann. Weisen der Pflanztopf und der Übertopf einen kreisförmigen Querschnitt auf, so wird ein ringförmiger Belüftungsspalt gebildet. Grundsätzlich können die Töpfe aber auch einen n-eckigen, beispielsweise quadratischen Querschnitt aufweisen, so daß der Belüftungsspalt nicht-ringförmig ist, sondern eine polygonale Kontur aufweist.

Handelt es sich bei dem Pflanztopf und bei dem Übertopf um voneinander getrennte Töpfe, die erst im Zusammenhang mit dem Bepflanzen ineinandergesetzt werden, so kann die Seitenwand des Übertopfes bzw. die Seitenwand des Pflanztopfes gegenüber der Vertikalen um 2 bis 10°, vorzugsweise um ca. 5°, geneigt sein. Dadurch wird das Stapeln der Übertöpfe bzw. der Pflanztöpfe vereinfacht. Insbesondere im Zusammenhang mit der Bepflanzung mit Orchideen, weiter insbesondere der Gattung Phalaenopsis, können der Pflanztopf und der Übertopf konisch nach unten zulaufende Seitenwände aufweisen, wobei der Übertopf beispielsweise einen Durchmesser von 11,5 cm und der Pflanztopf beispielsweise einen Durchmesser von ca. 10 cm aufweisen kann. Bei einteiliger Ausbildung des Kulturtopfes mit fest verbundenem Pflanztopf und Übertopf sind Größe und Form von Pflanztopf und Übertopf derart angepaßt, daß ein Ineinanderstapeln des Kulturtopfes auch bei einem zweiwandigen Aufbau mit festverbundenen Wänden möglich ist.

Der Pflanztopf und der Übertopf weisen vorzugsweise die Form eines Kegelstumpfes auf. Dadurch wird das Ineinanderstapeln erleichtert. Grundsätzlich ist es auch möglich, daß der Pflanztopf und/oder der Übertopf einen n-eckigen Querschnitt aufweisen. Auch bei n-eckiger Ausbildung kann der Kulturtopf einstückig ausgebildet sein und eine Doppelwandung aufweisen. Vorzugsweise weist der Kulturtopf eine entsprechende Formgebung auf, die auch bei n-eckigem Querschnitt und einteiligem Aufbau das Ineinanderstapeln von mehreren Kulturtöpfen zuläßt.

Um das Durchdringen des Übertopfes für Wurzeln der Pflanzen unmöglich zu machen, kann die Seitenwand des Übertopfes vollständig geschlossen ausgebildet sein. Es ist grundsätzlich jedoch auch möglich, daß die Seitewand des Übertopfes wenigstens einen seitlichen Schlitz und/oder wenigstens eine seitliche Öffnung als zusätzliche Belüftungsöffnung für den Pflanztopf aufweist. Beispielsweise können eine Mehrzahl von über den Umfang des Übertopfes verteilt angeordnete Schlitze vorgesehen sein. Die Breite eines Schlitzes bzw. der Durchmesser einer kreisförmigen Öffnung in der Seitenwand des Übertopfes sollte vorzugsweise kleiner als 5 mm sein, insbesondere weniger als 1 bis 2 mm betragen, so daß keine Wurzeln der Pflanze aus dem Belüftungsspalt durch den Übertopf hindurch nach außen wachsen können. Dies hängt letztlich natürlich von der Art der Pflanze ab bzw. der Dicke der von der Pflanze gebildeten Wurzeln. Orchideen der Gattung Phalaenopsis beispielsweise weisen Wurzeln mit einer Dicke zwischen 1 und 8 mm auf, so daß hier auch Schlitze bzw. Öffnungen in der Seitenwand des Übertopfes vorgesehen sein können, die eine Breite bzw. einen Durchmesser von weniger als 1 mm aufweisen.

Um eine besonders gute Belüftung der Pflanze im Wurzelbereich sicherzustellen, kann die Seitenwand und/oder der Boden des Pflanztopfes gitterförmig oder siebförmig ausgebildet sein. Der Einfachheit halber kann bei mehrteiliger Ausbildung des Kulturtopfes als Pflanztopf ein üblicherweise für Wasserpflanzen eingesetzter Gittertopf eingesetzt werden. Bei einem Gittertopf ist von Vorteil, daß dieser sowohl in der Seitenwand als auch im Boden großflächige Öffnungen aufweist, wobei es gerade bei den vorgenannten Gittertöpfen dazu kommen kann, daß die Wurzeln der Pflanze aus dem Gittertopf hinaus in den Ringspalt überwachsen. Bei dem Übertopf kann es sich um einen Zierpflanzentopf handeln, wie er beispielsweise aus der DE 202 06 329 U1 oder der DE 201 09 317 U1 bekannt ist. Zierpflanzentöpfe der in Rede stehenden Art werden im Stand der Technik insbesondere zur Aufzucht von Orchideen der Gattung Phalaenopsis eingesetzt.

Um für eine ausreichende Belüftung zu sorgen, kann eine seitliche Belüftungsöffnung in dem Pflanztopf eine Querschnittsfläche von 15 bis 250 mm² aufweisen, was sich auf die Öffnungsfläche einer einzelnen Belüftungsöffnung bezieht. Die Belüftungsöffnung kann kreisförmig oder auch n-eckig ausgebildet sein. In Abhängigkeit vom Substrat können die Öffnungen größer oder kleiner sein. Im übrigen versteht es sich, daß die Größe der Belüftungsöffnungen bzw. die Gesamtöffnungsfläche aller Belüftungsöffnungen derart gewählt ist, daß eine ausreichende Stabilität des Pflanztopfes gewährleistet ist. Bei einem Gittertopf ist hierbei von Vorteil, daß die Öffnungen durch Längsstreben und Querstreben gebildet werden, die miteinander verbunden sind, was zu einer ausreichenden Stabilität des Pflanztopfes beiträgt.

In dem Boden des Übertopfes kann wenigstens eine im Bereich des Belüftungsspaltes angeordnete Entwässerungsöffnung vorgesehen sein. In diesem Fall dient die Entwässerungsöffnung zum einen zum Ableiten von überschüssigem Wasser nach der Bewässerung der Pflanze und zum anderen zur Belüftung des Belüftungsspaltes und damit über die Belüftungsöffnungen in dem Pflanztopf auch zur Belüftung des Wurzelbereichs der Pflanze.

Auf einer Außenseite des Pflanztopfes und/oder auf einer Innenseite des Übertopfes kann wenigstens ein Abstandshalter für den Übertopf bzw, den Pflanztopf vorgesehen sein. Der Abstandshalter kann sowohl eine radiale Beabstandung zwischen dem Pflanztopf und dem Übertopf als auch eine Beabstandung des Bodens des Pflanztopfes vom Boden des Übertopfes sicherstellen. Beispielsweise kann der Boden des Übertopfes im mittleren Bereich gegenüber dem umgebenden radialen Randbereich in Form einer Haube nach oben gezogen sein, wobei im eingesetzten Zustand dann der Pflanztopf auf der Haube aufliegt. Durch den Abstandshalter wird ein Belüftungsspalt mit festgelegter Breite zwischen dem Pflanztopf und dem Übertopf eingestellt, was für die Belüftung des Pflanztopfes von Vorteil ist. Es versteht sich, daß auch bei einteiliger Ausbildung des Kulturtopfes wenigstens ein Abstandshalter vorgesehen sein kann, wobei der Pflanztopf durch eine Innenwandung und der Übertopf durch eine Außenwandung des doppelwandigen Kulturtopfes gebildet wird. Der Abstandshalter dient im übrigen sowohl bei der Ausbildung des Kulturtopfes mit zwei ineinander einsteckbaren Töpfen als auch bei einteiliger Ausbildung des Kulturtopfes dazu, eine ausreichende Stabilität des Kulturtopfes sicherzustellen.

Läßt sich der Kulturtopf durch Ineinandersetzen des Pflanztopfes in den Übertopf zusammensetzen, so kann auf einer Außenseite des Pflanztöpfes und/oder auf einer Innenseite des Übertopfes wenigstens eine Führung zur Zentrierung und/oder Fixierung des Pflanztopfes beim Einsetzen in den Übertopf vorgesehen sein. Dadurch wird das Einsetzen der Töpfe ineinander erleichtert und sichergestellt, daß es bei der Befüllung des Pflanztopfes bzw. beim Pflanzvorgang oder beim späteren Transport des Kulturtopfes nicht zu einem Hin- und Herrutschen des Pflanztopfes in dem Übertopf kommen kann. Beispielsweise können entsprechend ausgebildete Rippen vorgesehen sein, die beim Einsetzen des Pflanztopfes in den Übertopf automatisch eine Zentrierung und/oder Fixierung des Pflanztopfes bewirken.

Der Kulturtopf kann einen Deckel zum Verschließen der oberen Öffnung des Belüftungsspaltes aufweisen, wobei, vorzugsweise, der Deckel lösbar mit dem Pflanztopf und/oder dem Übertopf verbindbar ist. Dadurch kann das Herauswachsen von Wurzeln aus dem Belüftungsspalt nach oben in die Umgebung verhindert werden. Grundsätzlich ist es auch möglich, daß der Belüftungsspalt nach oben hin fest verschlossen ist.

Ist der erfindungsgemäße Kulturtopf zur Aufzucht von Pflanzen vorgesehen, die chlorophyllhaltige Wurzeln besitzen, wie beispielsweise Orchideen der Gattung Phalaenopsis, so kann die Seitenwand des Übertopfes und, vorzugsweise, auch die Seitenwand des Pflanztopfes transparent sein, um es der Pflanze zu ermöglichen, über die Wurzeln Photosynthese zu betreiben.

Im einzelnen gibt es eine Vielzahl von Möglichkeiten, den erfindungsgemäßen Kulturtopf auszugestalten und weiterzubilden, wobei einerseits auf die abhängigen Patentansprüche und andererseits auf die nachfolgende Beschreibung eines bevorzugten Ausführungsbeispiels der Erfindung unter Bezugnahme auf die Zeichnung verwiesen wird. In der Zeichnung zeigen
- Fig. 1: eine Seitenansicht, teilweise als Schnitt, eines erfindungsgemäßen Kulturtopfes mit einem äußeren Übertopf und mit einem in den Übertopf eingesetzten inneren Pflanztopf,
- Fig. 2: eine Seitenansicht des inneren Pflanztopfes aus Fig. 1,
- Fig. 3: eine Ansicht des in Fig. 1 dargestellten inneren Pflanztopfes von unten,
- Fig. 4: den in Fig. 1 dargestellten äußeren Übertopf in einer Seitenansicht, teilweise als Schnittdarstellung, und
- Fig. 5: den in Fig. 1 dargestellten äußeren Übertopf in einer Ansicht von unten.

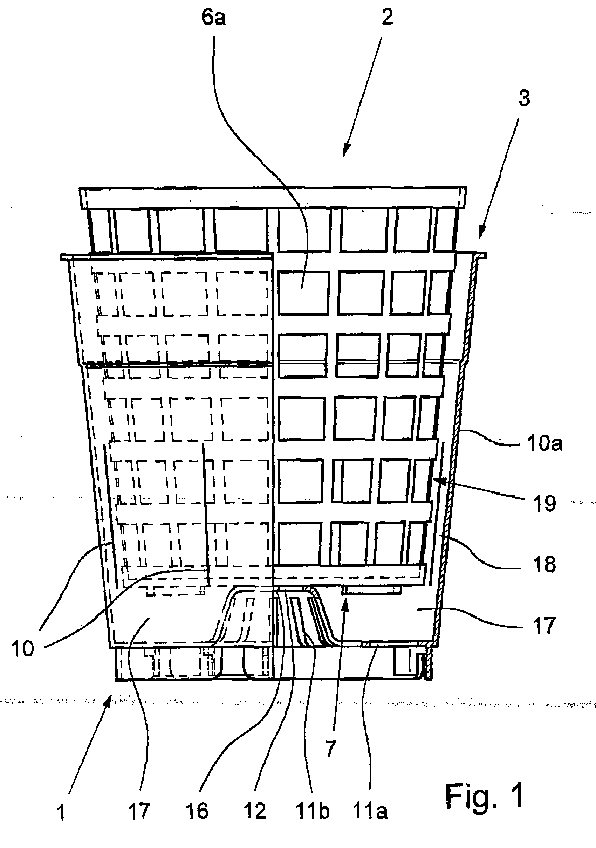

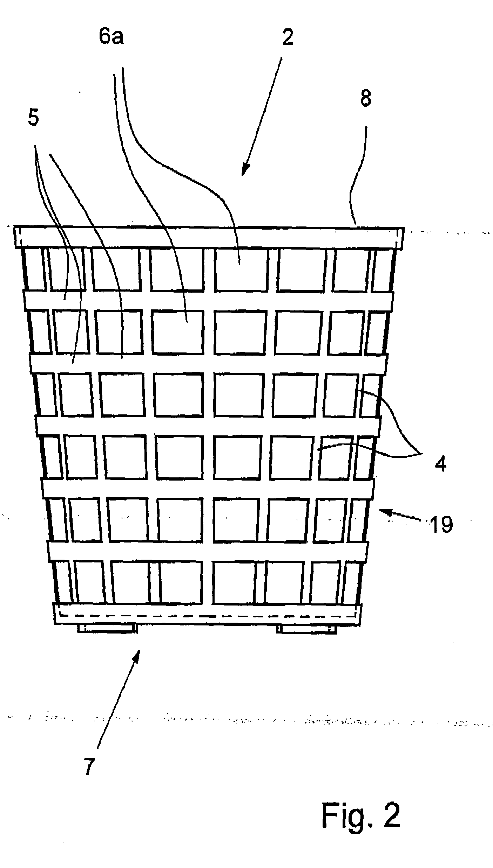

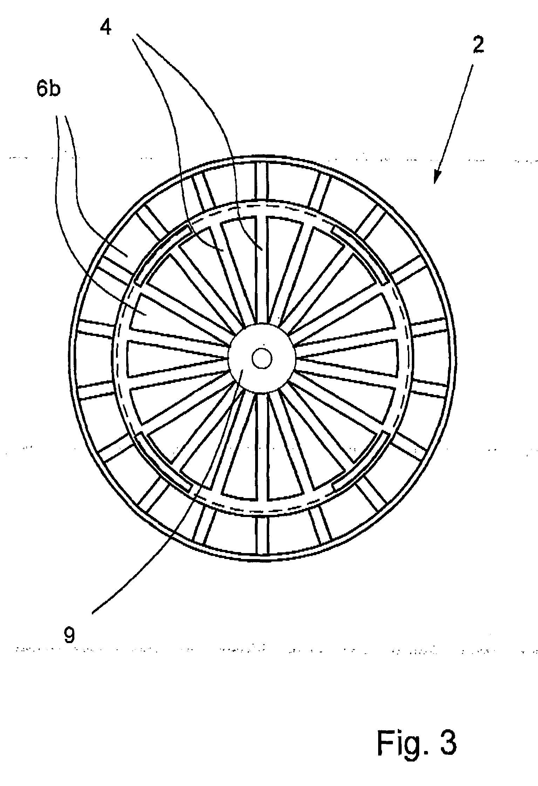

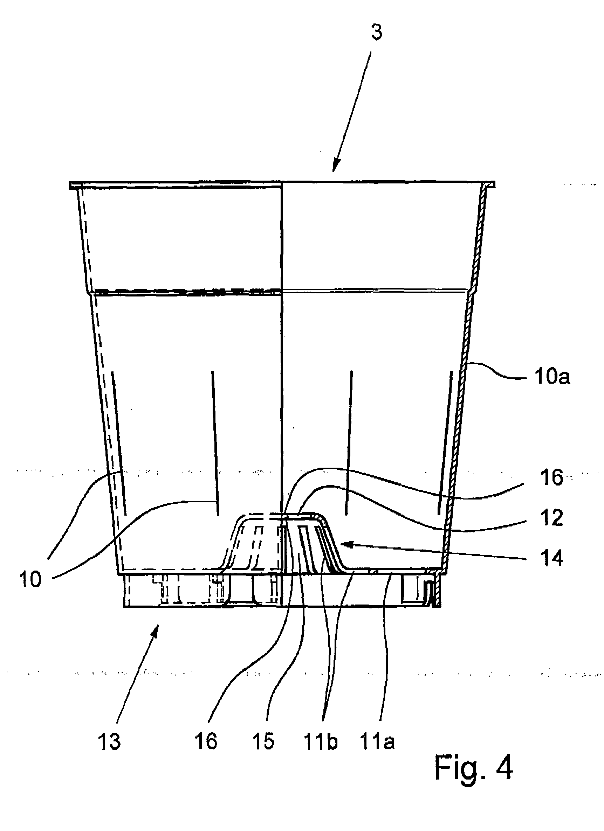

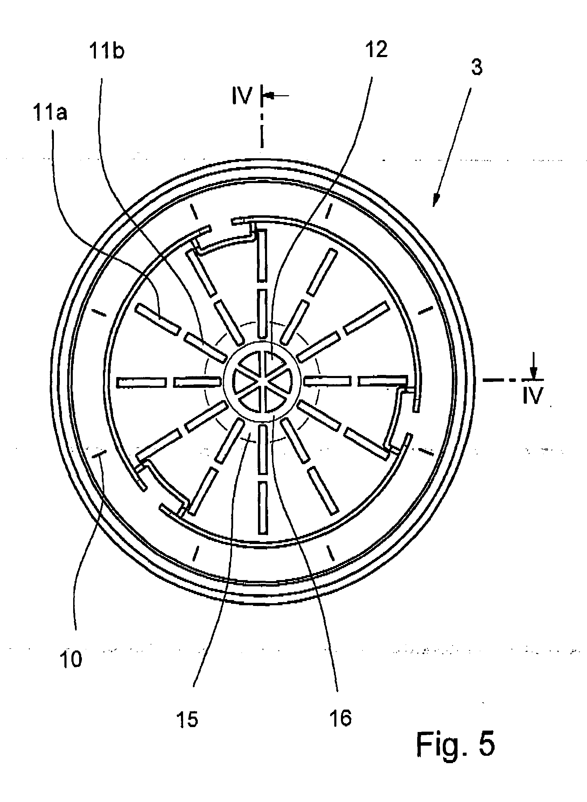

In Fig. 1 ist ein Kulturtopf 1 dargestellt, der einen inneren Pflanztopf 2 und einen äußeren Übertopf 3 aufweist. Der Pflanztopf 2 und der Übertopf 3 können nach oben hin auch bündig angeordnet sein. Der Pflanztopf 2 ist in den Fig. 2 und 3, der Übertopf 3 in den Fig. 4 und 5 dargestellt, jeweils in einer Seitenansicht und in einer Ansicht von unten. Der dargestellte Kulturtopf 1 dient zur Aufzucht von Zierpflanzen, insbesondere von Zimmerpflanzen, beispielsweise von Orchideen der Gattung Phalaenopsis. Darüber hinaus kann der dargestellte Kulturtopf 1 auch zur Aufzucht andere Epiphytenarten eingesetzt werden,

Wie sich aus den Fig. 2 und 3 ergibt, ist der Pflanztopf 2 als Gittertopf ausgebildet, der durch vertikal verlaufende Längsstreben 4 und die Längsstreben 4 miteinander verbindende Querstreben 5 gebildet wird. Die Längsstreben 4 weisen einen halbkreisförmigen Querschnitt auf, wobei der Kreisbogen nach innen hin gerichtet ist. Der Halbkreisdurchmesser der Längsstreben beträgt ca. 3 mm. Die Querstreben 5 sind streifenförmig ausgebildet und weisen eine Breite von ca. 6 mm auf, Der Abstand der Längsstreben 4 in Umfangsrichtung beträgt zwischen 11 bis 15 mm, nach oben hin zunehmend, so daß der Pflanztopf 2 die Form eines Kegelstumpfes aufweist. Dadurch wird die Stapelbarkeit des Pflanztopfes 2 erleichtert.

Zwischen den Längsstreben 4 und den Querstreben 5 werden Belüftungsöffnungen 6a, 6b für den Wurzelbereich einer Pflanze gebildet, wobei die Pflanze in ein in dem Pflanztopf 2 eingefülltes und nicht dargestelltes Substrat eingepflanzt wird. Seitliche Belüftungsöffnungen 6a weisen eine von einem Topfboden 7 des Pflanztopfs 2 zum oberen Rand 8 des Pflanztopfs 2 hin zunehmende Breite von ca. 11 mm bis ca. 15 mm und eine von unten nach oben hin abnehmende Höhe von ca. 11 mm bis ca. 9 mm auf. Im Bereich des Topfbodens 7 des Pflanztopfs 2, was in Fig. 3 dargestellt ist, sind die Längsstreben 4 in Richtung auf einen mittleren Bereich 9 des Topfbodens 7 hin umgelegt, so daß sich eine sternförmige Anordnung der Längsstreben 4 mit bodennahen Belüftungsöffnungen 6b ergibt.

In den Fig. 4 und 5 ist der Übertopf 3 dargestellt, der über den Umfang einer Seitenwand 10a des Übertopfes 3 verteilt angeordnete und sich in axialer Richtung erstreckende Belüftungsschlitze 10 und in Fig. 5 dargestellte in radialer Richtung erstreckende Entwässerungsöffnungen 11a, 11b und weitere Entwässerungsöffnungen 12 aufweist. Der Topfboden 13 des Übertopfes 3 weist eine im mittleren Bodenbereich angeordnete Haube 14 auf, wobei sich in radialer Richtung innen liegende Entwässerungsöffnungen 11b von einem ebenen Bodenabschnitt des Topfbodens 13 beginnend schräg nach oben hin bis in einen eine Seitenwand 15 der Haube 14 bildenden Bodenabschnitt des Topfbodens 13 erstrecken. Die Haube 14 weist einen von einem mittleren Bodenabschnitt des Topfbodens 13 gebildeten oberen Plateauabschnitt 16 auf, in dem die weiteren Entwässerungsöffnungen 12 vorgesehen sind.

Die Wirkungsweise des in Fig. 1 dargestellten Kulturtopfes 1 wird nachfolgend beschrieben. Um den Kulturtopf 1 in einen Gebrauchszustand zu überführen, wird zunächst der Pflanztopf 2 in den Übertopf 3 eingesetzt, so daß der Topfboden 7 des Pflanztopfs 2 auf dem Plateauabschnitt 16 des Übertopfs 3 aufliegt. Es versteht sich, daß auch solche Ausführungsformen möglich sind, bei denen der Übertopf 3 keine Haube 14 aufweist, sondern einen im wesentlichen ebenen Topfboden 13. Im Gebrauchszustand liegt dann der Pflanztopf 2 auf dem Topfboden 13 im wesentlichen über die gesamte Breite des Topfbodens 13 auf. Dadurch wird ein sich in radialer Richtung erstreckender unterer Ringspalt 17 zwischen dem Pflanztopf 2 und dem Übertopf 3 gebildet. Im übrigen wird ein sich in axialer Richtung erstreckender seitlicher Ringspalt 18 zwischen den eine Seitenwand 19 des Pflanztopfes 2 bildenden Längsstreben 4 und Querstreben 5 und der Seitenwand 10a des Übertopfes 3 gebildet. Der untere Ringspalt 17 und der seitliche Ringspalt 18 bilden einen gemeinsamen Belüftungsbereich für die Wurzeln einer in den Pflanztopf 2 eingepflanzten Pflanze. Zum Bepflanzen wird der Pflanztopf 2 mit einem stückigen Substrat befüllt, wobei es sich bei dem Substrat beispielsweise um Rinden-Hackschnitzel handeln kann.

Die Belüftung des Wurzelbereichs einer in den Pflanztopf 2 eingepflanzten Pflanze erfolgt über die Belüftungsöffnungen 6a und die weiteren Belüftungsöffnungen 6b des Pflanztopfes 2, über den unteren Ringspalt 17 und den seitlichen Ringspalt 18 sowie die im Boden 13 des Übertopfes 3 vorgesehenen Entwässerungsöffnungen 11a, 11b, 12. Zumindest in radialer Richtung außen liegende Entwässerungsöffnungen 11a stehen dabei in einem direkten Belüftungskontakt mit dem unteren Ringspalt 17 bzw. dem seitlichen Ringspalt 18. Im übrigen kommt es auch über die Belüftungsschlitze 10 in der Seitenwand 10a des Übertopfes 3 zu einem Luftdurchtritt von der Umgebung in den zweiten Ringspalt 18 und damit zur Belüftung des Wurzelbereichs der Pflanze. Im Ergebnis wird eine sehr große Austauschfläche für die Belüftung des Wurzelbereichs der Pflanze zur Verfügung gestellt, was sich positiv auf das Wachstum und die Kondition der Pflanze auswirkt. Die Belüftungsöffnungen 6a, 6b in dem Pflanztopf 2 sowie die Entwässerungsöffnungen 11a, 11b, 12 im Topfboden 13 des Übertopfs 3 lassen im übrigen eine schnelle und ausreichende Entwässerung des Wurzelbereichs nach dem Bewässern der Pflanze zu.

Darüber hinaus ist es so, daß bei der Aufzucht einer Pflanze Wurzeln aus dem Innenbereich des Pflanztopfes 2 über die Belüftungsöffnungen 6a und gegebenenfalls auch über die weiteren Belüftungsöffnungen 6b am Topfboden 7 des Pflanztopfes 2 in den seitlichen Ringspalt 18 einwachsen. Die Seitenwand 10a des Übertopfes 3 ist für die Wurzeln der Pflanze undurchdringbar ausgebildet, so daß es nicht zu einem Herauswachen von Wurzeln durch die Seitenwand 10a hindurch in die Umgebung kommen kann. Die Belüftungsschlitze 10 müssen eine entsprechend geringe Breite aufweisen.

Im Ergebnis wird mit dem beschriebenen und dargestellten Kulturtopf 1 das Wachstum und die Kondition einer aufgezüchteten Pflanze durch eine sehr gute Belüftung des Wurzelbereichs bei ausreichender Möglichkeit der Entwässerung nach der Bewässerung der Pflanze gewährleistet und darüber hinaus ein gegenseitiges Verschlingen von Wurzeln von Pflanzen, die in benachbart zueinander aufgestellten Kulturtöpfen 1 gepflanzt sind, wirksam verhindert.

## Patentansprüche

1. Kulturtopf (1) zur Aufzucht einer Pflanze, mit einem inneren Pflanztopf (2) und mit wenigstens einem den Pflanztopf (2) umgebenden äußeren Übertopf (3), wobei der Pflanztopf (2) zur Aufnahme eines zur Aufzucht einer Pflanze vorgesehenen Substrates ausgebildet ist, wobei zwischen dem Pflanztopf (2) und dem Übertopf (3) ein Belüftungsspalt vorgesehen ist, wobei in wenigstens einer Seitenwand (19) des Pflanztopfes (2) wenigstens eine seitliche Belüftungsöffnung (6a) zur Belüftung des Wurzelbereichs der Pflanze vorgesehen ist und eine der Seitenwand (19) des Pflanztopfes (2) benachbarte Seitenwand (10a) des Übertopfes (3) für Wurzeln der Pflanze undurchdringbar ausgebildet ist, so daß es nicht zu einem Herauswachsen von Wurzeln durch die Seitenwand (10a) des Übertopfes (3) hindurch in die Umgebung kommt.

2. Kulturtopf nach Anspruch 1, **dadurch gekennzeichnet, daß** der Kulturtopf einteilig ausgebildet ist, wobei der Pflanztopf (2) in den Übertopf (3) einsetzbar ist.

3. Kulturtopf nach einem der vorhergehenden Ansprüche 1 oder 2, **dadurch gekennzeichnet, daß** die Seitenwand (10a) des Übertopfes (3) vollständig geschlossen ist.

4. Kulturtopf nach einem der vorhergehenden Ansprüche, **dadurch gekennzeichnet, daß** die Seitenwand (19) und/oder ein Boden (7) des Pflanztopfes (2) gitterförmig oder siebförmig ausgebildet sind.

5. Kulturtopf nach einem der vorhergehenden Ansprüche, **dadurch gekennzeichnet, daß** die seitliche Belüftungsöffnung (6a) in dem Pflanztopf (2) eine Querschnittsfläche von 15 bis 250 mm² aufweist.

6. Kulturtopf nach einem der vorhergehenden Ansprüche, **dadurch gekennzeichnet, daß** in einem Boden (13) des Übertopfes (3) wenigstens eine im Bereich des Belüftungsspaltes angeordnete Entwässerungsöffnung (11, 12) vorgesehen ist.

7. Kulturtopf nach einem der vorhergehenden Ansprüche, **dadurch gekennzeichnet, daß** auf einer Außenseite des Pflanztopfes (2) und/oder auf einer Innenseite des Übertopfes (3) wenigstens ein Abstandshalter für den Übertopf (3) bzw. den Pflanztopf (2) vorgesehen ist.

8. Kulturtopf nach einem der vorhergehenden Ansprüche 2 bis 7, **dadurch gekennzeichnet, daß** wenigstens eine Führung zur Zentrierung und/oder Fixierung des Pflanztopfes (2) beim Einsetzen in den Übertopf (3) vorgesehen ist.

9. Kulturtopf nach einem der vorhergehenden Ansprüche, **dadurch gekennzeichnet, daß** ein Deckel zum Verschließen des Belüftungsspaltes von oben vorgesehen ist.

10. Kulturtopf nach einem der vorhergehenden Ansprüche, **dadurch gekennzeichnet, daß** die Seitenwand (10a) des Übertopfes (3) und, vorzugsweise, die Seitenwand (19) des Pflanztopfes (2) transparent sind.
